# EUROPEAN PATENT SPECIFICATION

(11) **EP 4 074 168 B1**
(45) Date of publication and mention of the grant of the patent: **15.11.2023**
(21) Application number: 22167824.6
(22) Date of filing: 12.04.2022
(51) Int. Cl.: A01G 9/12, A01G 17/10

(54) **PLANT SUPPORT BRACE**
PFLANZENSTUETZE
DISPOSITIF DE SUPPORT DE PLANTE

(30) Priority: 16.04.2021 NL 2027985
(43) Date of publication of application: 19.10.2022
(73) Proprietor: Viridi circulair BV, 2631 RG Nootdorp (NL)
(72) Inventor: VAN DER GOES, Serge Cornelis, 2631 RG Nootdorp (NL); HAAS, Dirk Johannes, 2691 KN 's-Gravenzande (NL)
(74) Representative: Taneja, Bipin

(56) References cited:
- WO-A1-2010/150632
- FR-A1- 2 873 262
- JP-B1- 6 002 827
- KR-B1- 101 894 658
- KR-U- 20140 005 240

## Description

### FIELD OF THE INVENTION

The invention relates to a plant support brace that can be used both in horticulture as well as in open-air agriculture.

The invention relates in particular to a plant support brace for use with stems, vines or branches of fruit-bearing plants.

### BACKGROUND OF THE INVENTION

The use of plant support braces, collars, fasteners, clamps, clips and hooks is well known. Such plant support braces are described for example in JP 6 002827 B1, WO 2010/150632 Al, KR 2014 0005240 U, KR 101 894 658 B1 and FR 2 873 262 Al.

In one known plant support brace for supporting plant stems or branches, the brace comprises a central elongate frame comprising at least one segment, whereby the at least one segment forms the base of a channel, with a wall extending from either side of the base and at an angle to the base such that the base and side walls together form an open channel suitable for accommodating a part of a branch or stem of a plant.

When plants reach the end of their growth or life cycles, their remains need to be disposed of. The remains are treated as waste. Support braces, collars, fasteners, etc. - which are often of inorganic material or neither bio-degradable nor compostable - end up in the waste as well. Separation of inorganic or not bio-degradable components from the organic plant remains usually takes place but does not result in a stream of organic waste that is completely devoid of inorganic or not bio-degradable contaminants. It is generally accepted that the more cross-contamination there is of inorganic components and organic components in a waste stream, the higher the costs of treatment and disposal of the waste stream will be.

### SUMMARY OF THE INVENTION

It is an object of the invention to reduce the costs of disposal and treatment of horticultural waste.

It is an object of the invention to increase the recyclability of horticultural waste as much as possible.

It is an object of the invention to reduce the use of disinfectants or cleaning solutions during the treatment and disposal of horticultural waste as much as possible.

It is an object of the invention to reduce the spread of plant viruses in the horticultural industry, or during the treatment and disposal of horticultural waste, as much as possible.

It is an object of the invention to contribute towards a nett reduction of CO₂-emissions in the horticultural industry.

It is an object of the invention to provide a plant support brace such that use of it increases the efficiency of plant production.

It is an object of the invention to provide a plant support brace such that use of it enhances plant health.

One or more of the objects of the invention are achieved with the provision of a plant support brace for supporting plant stems or branches, whereby the brace comprises:
a central elongate frame (F) comprising at least one segment (2, 4, 6, 8), whereby the at least one segment forms the base (12) of a channel (20), with a wall (14, 16) extending from either side of the base and at an angle to the base such that the base and side walls together form an open channel suitable for accommodating a part of a branch or stem of a plant, and
whereby the at least one segment is provided with a wounding element (30) that is capable of making a wound in the surface of a plant stem or branch.

A technical effect of a wounding element is that it will cause a part of a branch or stem of a plant supported by a plant support brace according to the invention to be wounded at at least one spot or locale without fail.

Wounding of the surface of a plant stem or branch supported by a plant support brace according to the invention will result in soft tissue, also known as callus, forming over the wounded or cut plant surface, leading to healing. Basically, a callus is an amorphous mass of loosely arranged thin-walled parenchymatous cells arising from the proliferating cells of the parent tissue. When a callus forms, some of its cells will organize into growing points, thus giving rise to a more robust and healthier regeneration of the wounded plant area. Wounding of a plant surface by means of a plant support brace according to the invention thus results in an enhancement of both the growth and the health of the supported plant part.

A wounding of a plant surface within the meaning of the invention should be understood to comprise any action with respect to a plant surface that will result in soft tissue or callus forming over the wounded plant surface. A callus-forming action can be - without any limitation - a scratch, abrasion, puncture, piercing, cut, fracture or such like.

Another technical effect of a wounding element is that it will cause the plant support brace to be substantially held in position relative to the part of a plant stem or branch it supports.

A brace according to the invention may be deformable. This technical feature will allow for the brace to adapt or to be adapted to any changes in the contour and size of plant matter accommodated within it during the course of plant growth.

A brace according to the invention may be pliable at an angle relative to its direction of elongation. This technical feature will allow for the brace to adapt or to be adapted to better support plant matter along a non-rectilinear, e.g. bendy or curvy, section thereof.

The plant support brace can comprise a single segment. It may also comprise two or more segments in which embodiment the segments are preferably substantially similar or repeat segments. If two or segments of the backbone of the brace are each provided with a wounding element, then there will be further technical effects in that it will have an anti-torsional effect and cause the segments to be substantially held in position relative to each other and firmly guide the plant to grow in the desired direction.

Some non-limitative embodiments of suitable shapes of wounding elements are studs, blades, barbs, teeth or tines, that is: any sharp point or edge, ideally on the inner side of a base or side wall of a segment of the plant support brace. A brace with a burr on its inner side or a burred edge can function as a wounding element capable of making a wound in the surface of a plant stem or branch.

According to another embodiment of the invention, the plant support brace comprising at least two segments further comprises a wounding element at the trailing edge of a first segment provided in an at least partly inter-accommodating or inter-engaging arrangement with a corresponding recess provided in the leading edge of the following or second segment.

This will enhance the aforementioned technical effects of an anti-torsional effect and of causing the segments to be substantially held in position relative to each other and guiding the plant even more firmly to grow in the desired direction. In addition, this pairing of a wounding element and a recess will contribute to a safe handling of the plant support brace in its inoperative state as the sharp point or edge of the wounding element will in effect be recessed at least in part.

An inter-accommodating or inter-engaging pair of a wounding element and a recess can be provided on either the base or a side wall of adjacent segments of the plant support brace.

With the causation of an anti-torsional effect, adjacent segments will not, or at least not readily, twist relative to each other. The walls of adjacent segments on the same side of the brace will also not, or at least not readily, slide over each other to distort the shape of the brace. This relative immobility and accompanying sturdiness are also useful during the manufacturing of the brace, during singulation or separation of a number of substantially similar or repeat segments from other segments during use, for example by cutting or breaking-off, and in the avoidance of any unintended or inadvertent torsion of the brace as a whole.

The material of the brace is preferably at least partly and more preferably completely bio-based, bio-degradable or compostable. Examples of suitable materials are an at least partly bio-based, bio-degradable or compostable plastic, wood, fibres, metal or alloy.

In an embodiment comprising a metal or alloy, the metal or alloy can be ferromagnetic (that is, comprise any of Fe, Co, Ni) or paramagnetic (Al). One advantage hereof is that the metal brace will be separable from the organic plant remains during treatment and disposal of the remains. Less cross-contamination of organic and inorganic waste components in a waste stream will lead to lower costs of disposal of the waste. In the case of ferromagnetic metals, there will be further advantages. Firstly, some of the metal may be taken up as nutrients by the plant during its life cycle. Secondly, part of the brace may possibly disintegrate and gradually be absorbed into the bio-degradable and compostable organic plant remains which will improve the quality and efficacy of any compost made from the remains.

It will be clear that any at least partly bio-based, bio-degradable or compostable material that can be shaped and dimensioned to meet appropriate values regarding relevant product properties such as moisture content, edge or flat crush strengths, burst strength, compression strength, bending resistance, impact resistance, etc. will be suitable for use in a plant support brace according to the invention.

According to one embodiment of the invention, the material of the brace is preferably pliable. This has the advantage that the shape of the brace can adapt or can be adapted to support the section of the plant accommodated within it in an optimum manner. Any adaptation to the contour and the size of the plant can take place naturally, with the shape of the brace following the natural growth of the plant, or with intent by hand or e.g. with the use of a pair of pliers.

According to another embodiment of the invention, the material of the brace is preferably crimpable. This has the advantage of a further degree of adaptability of the brace to the contour and the size of the supported plant area.

With both material properties of pliability and crimpability, the brace will have an optimum adaptability both initially and during the course of growth of the plant.

The design and dimensions of a plant support brace according to the invention can be adapted to most sizes and varieties common in horticulture and open-air agriculture. According to one embodiment of the invention, the design is preferably substantially open-tubular.

According to another embodiment of the invention, the cross-section of the channel of a brace can be either angular or curvilinear in a part of the cross-section.

According to another embodiment of the invention, the contour and/or size of one or more of the segments can be changeable, such as with the provision of slits.

According to another embodiment of the invention, one or more segments can be provided with fault lines to enhance a change of orientation of one segment relative to another.

It will be readily understood that the provision of slits and/or fault lines in a brace according to the invention can be engineered as to enable a changing of the contour and/or size of one or more of the segments of the brace and/or a changing of the orientation of one segment relative to another to be done by hand without requiring a tool. Doing away with such a requirement will decrease a need for disinfectants; it will also reduce the risks of spreading plant diseases.

The side walls on either side of the base can be equally long in an embodiment of a rectilinear brace. The side walls on one side of the base can have shorter or longer lengths compared with the lengths of the side walls on the opposite or facing side of the base so that the brace can have a curvilinear course, i.e. a curvature with an inside bend and an outside bend. This will allow for pre-forming braces with an inner curve towards the side of the base with the shorter side walls as in practice use can be expected to be for the supporting of short, curvilinear sections of a branch or stem of a plant.

A plant support brace according to the invention can be produced as singular units comprising a number of segments, or as a sleeve, rail, clip or rack of segments from which any desired number of segments can be separated. An appropriate number of segments to be separated as a singular unit will be determined by the length of a plant stem or branch that will require to be supported during the course of growth of the plant.

It will be clear that a plant support brace according to the invention can be configured to be part of a multi-functional attribute, such as a system arranged to couple or inter-link a plant support brace according to any preceding claim with other parts of one or more plants or with other structures such as plant support sticks or pipes.

The aspects and measures described in this description and the claims of the application and/or shown in the drawings of this application may possibly also be used individually. Said individual aspects may be the subject of divisional patent applications relating thereto. This particularly applies to the measures and aspects that are described per se in the dependent claims.

### BRIEF DESCRIPTION OF THE DRAWINGS

The invention will be elucidated with reference to examples of processes depicted schematically in the attached drawings, in which:
Figure 1 depicts a perspective view of a generalized first embodiment of a plant support brace according to the invention as mounted on a branch of a fruit-bearing plant, in this example a tomato vine,
Figure 2 depicts a perspective view of a second embodiment of a plant support brace according to the invention wherein more than one segment each are provided with a wounding element,
Figure 3 depicts an orthogonal view of the embodiment of the plant support brace of Figure 2,
Figure 4 depicts a perspective view of a third embodiment of the plant support brace according to the invention provided having a different longitudinal cross-section and provided with slits,
Figure 5 depicts a perspective view of a fourth embodiment of a plant support brace according to the invention wherein a single segment is provided with a wounding element,
Figure 6 depicts a perspective view of a non-limitative variety of shapes of wounding elements suitable for provision with a plant support brace according to the invention,
Figure 7 depicts a perspective view of a number of segments of a generalized brace mutually spaced apart along fault lines to adapt to a different degree of curvature of a plant stem or branch, either initially or during the course of growth of the plant stem or branch,
Figure 8 depicts a perspective view of a sleeve, rail, clip or rack of segments from which any desired number of segments can be separated to form a plant support brace according to the invention; and
Figure 9 depicts a perspective view of a fifth embodiment of a plant support brace according to the invention wherein the number of segments and the lengths of the segments are varied.

### DETAILED DESCRIPTION OF THE DRAWINGS

The reference signs used in the following should not be construed as limiting the extent of the matter protected by the claims; their sole function is to make the claims easier to understand.

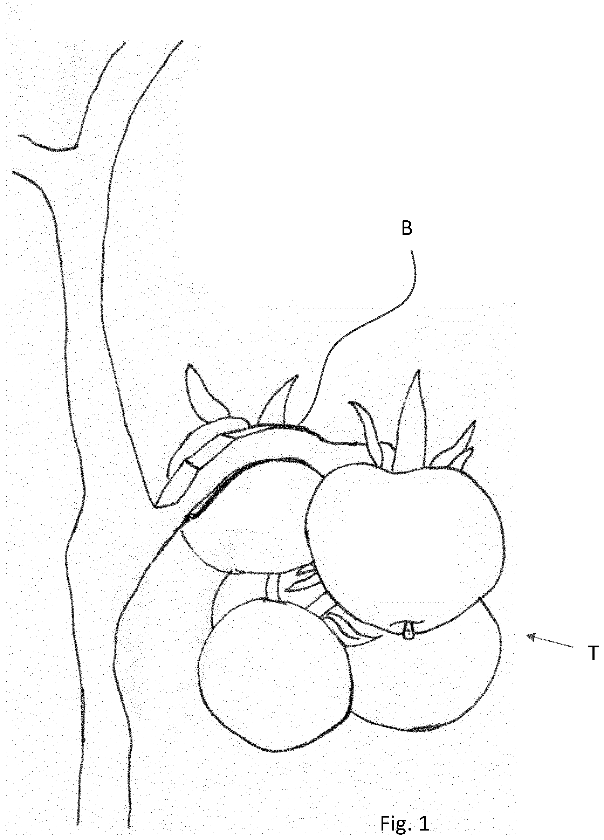

In Figure 1 a generalized first embodiment of a plant support brace B according to the invention is depicted as mounted on a branch of a fruit-bearing plant, in this example a tomato vine T.

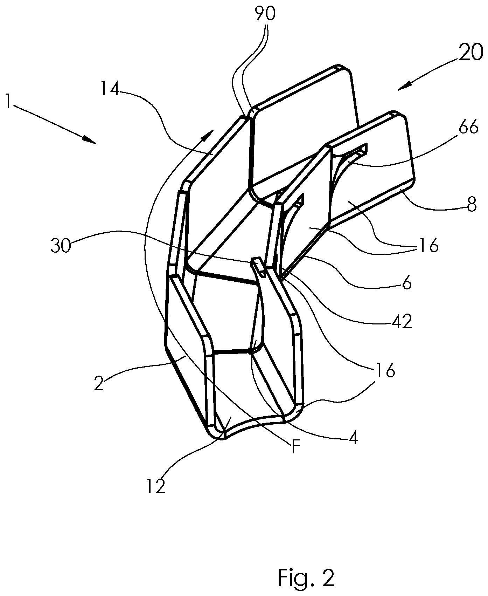

In Figure 2, a perspective view of a second embodiment of a plant support brace according to the invention is shown. The brace 1 comprises a central elongate frame F which is curvilinear in part. The brace 1 comprises four segments 2, 4, 6 and 8. Each segment comprises a base 12 and two side walls 14, 16 extending from either side of the base and at an angle to the base 12 such that the base and side walls together form an open channel 20. In this example the longitudinal cross-section of the channel is similar to a flat-bottomed U. The two side walls 14, 16 are of differing lengths, with the side walls 16 shorter than their corresponding walls 14. In this embodiment wherein more than one segment each are provided with a wounding element, the wounding elements 30 on the side walls 16 of the segments 2, 4 and 6 are in the shape of tines which are inter-accommodated in corresponding recesses 66 in the side walls 16 of the segments 4, 6 and 8, respectively.

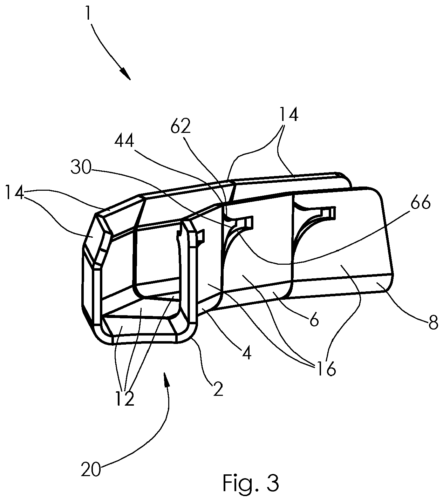

Figure 3 depicts an orthogonal view of the embodiment of Figure 2. The four-segment brace 1 comprises a wounding element 30 at the trailing edge 44 of a first segment, e.g. segment 4, which element 30 is at least partly in an inter-accommodating or inter-engaging arrangement with a corresponding recess 66 provided in the leading edge 62 of the following or second segment, e.g. segment 6, whereby the wounding element 30 and the recess 66 both are provided in a side wall 16 of their respective segments.

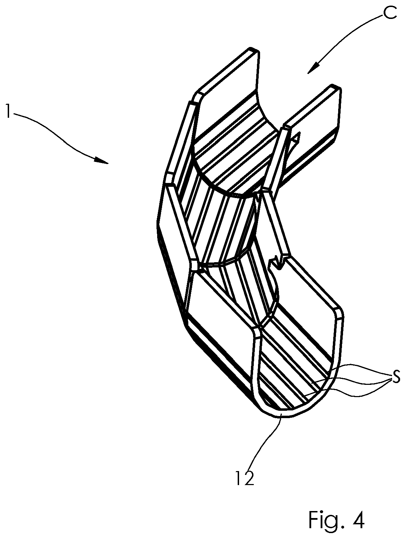

Figure 4 depicts a perspective view of a third embodiment of the plant support brace according to the invention having a substantially open-tubular shaped cross-section. In this example, the base 12 of the open channel C is provided with a number of slits S to enable re-shaping of the contour and/or size of one or more of the segments. As in the embodiment of Figures 2 and 3, in this third embodiment some of the four segments 2, 4, 6, 8 are substantially similar or repeat segments.

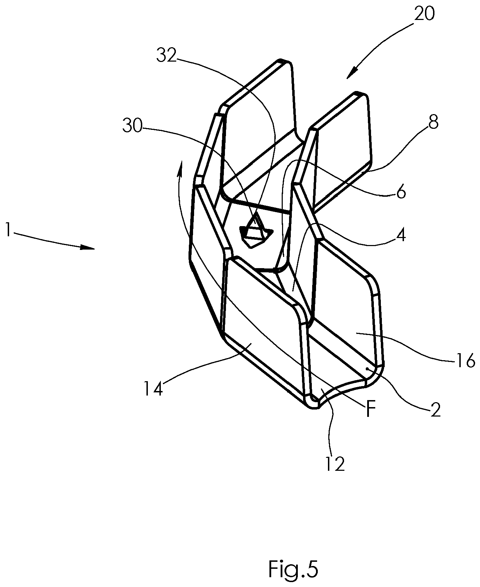

Figure 5 depicts a perspective view of a fourth embodiment of a plant support brace according to the invention wherein a single segment is provided with a wounding element. In this embodiment, only the base 12 of segment 6 is provided with a wounding element 30. The wounding element is shaped as an arrowhead 32.

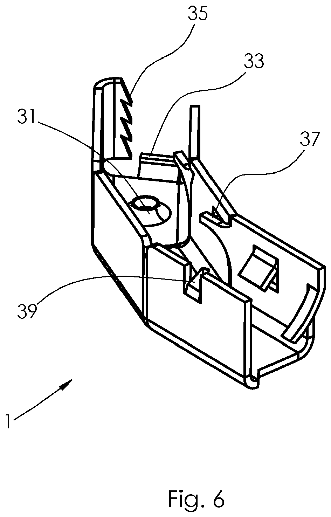

In Figure 6, a non-limitative variety of suitable shapes of a wounding element 30 are shown by way of example only. A wounding element can be a stud 31, blade 33, tooth 35, tine 37 or arrowhead 39. It can also be a barb. As shown, the wounding element can be provided at any suitable place on, within or around the brace. Any shape with a sharp point or edge capable of making a wound in the surface of a plant stem or branch to be supported by the brace will do.

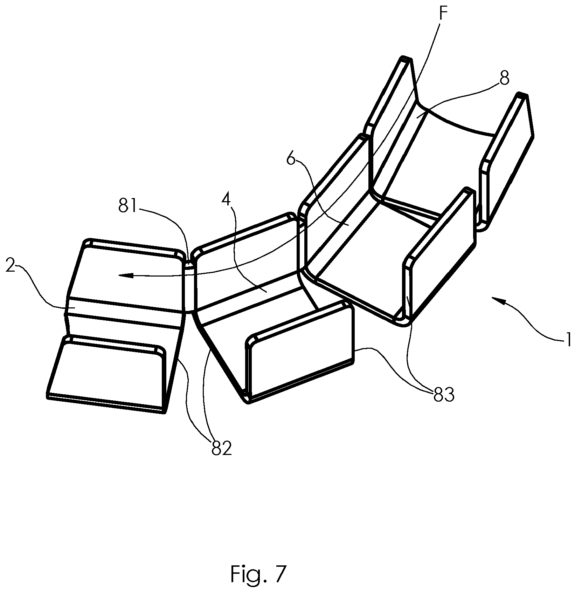

Figure 7 depicts a perspective view of a number of segments of a generalized brace mutually spaced apart along fault lines to adapt to a different degree of curvature of a plant stem or branch, either initially or during the course of growth of the plant stem or branch. The pliable sections shared by adjoining segments on an inside bend of the brace where the segments stay adjoined are indicated with reference numeral 81. The dimensions and other material properties of the sections 81 can be engineered as desired, i.e. to stay adjoined as shown or to break off as and when required, e.g. when a segment needs to be singulated from a rack as explained below. The fault lines initially shared by adjoining segments at their bases are indicated by the reference numerals 82. The fault lines on an outside bend of the brace that are initially shared by adjoining braces are indicated with reference numerals 83.

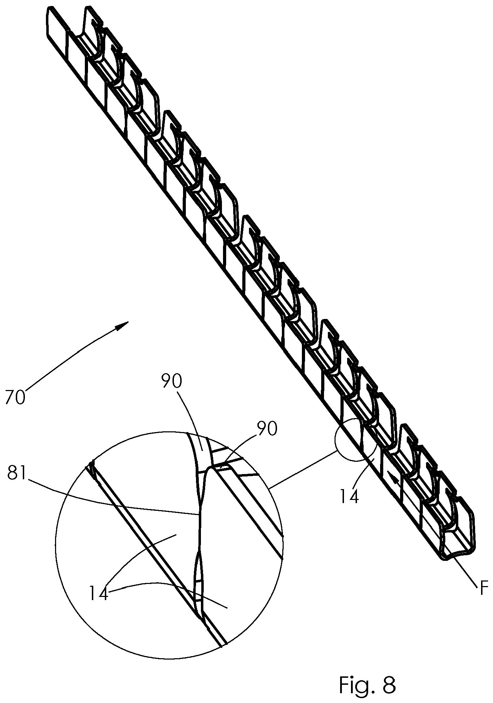

In Figure 8, a sleeve, rail, clip or rack 70 of segments according to the invention are shown. Any desired number of segments can be separated from the rack 70 to form a plant support brace according to the invention. By way of example, the side walls 14 are provided with notches or indentations 90 at their top corners lying adjacent to the top corners of neighbouring segments. These rounded-off indentations provide several technical contributions. Firstly, it becomes easier to break off segments from the rack. Secondly, the rounded-off indentations allow for individual segments to follow any changes in the contour and the size of the plant following its natural growth and thus maintain an optimum support of their plant sections. Thirdly, the rounded-off indentations contribute to the ease with which the shape and orientation of individual segments and the curvature of the brace as a whole can be adapted to follow any changes in the contour and the size of the plant following its natural growth.

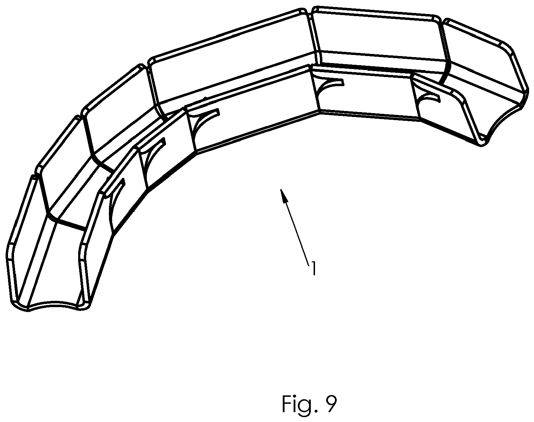

In Figure 9, a further variation of embodiments of the plant support brace is shown comprising of segments of varying lengths. An appropriate number of segments forming a singular unit will be determined by the size, i.e. inter alia the length and weight of a plant stem or branch that will require to be supported during the course of growth of the plant.

Some examples of plants for which the support brace according to the invention can be used are tomatoes, bell peppers, courgettes, aubergines and cucumbers.

The main technical effect of a plant support brace according to the invention is to make a wound in a plant stem or branch in at least one spot or locale without fail. Such purposive wounding leads to callus-forming, resulting in some of the cells in the wounded plant area to organize into growing points, thus giving rise to a more robust and healthier regeneration of the wounded plant area. The use of a plant support brace according to the invention thus results in an enhancement of both the growth and the health of the supported plant part. Other advantages related to the use of the invention are that it will cause the plant support brace to be substantially held in position relative to the part of a plant stem or branch it supports, there will an added anti-torsional effect - both between adjoining segments as well as the brace as a whole - and with the material of the brace preferably being at least partly and more preferably completely bio-based, bio-degradable or compostable, there will be a greater degree of recyclability and a reduction of the costs of treatment or disposal of horticultural waste as compared with current practices.

The above description is included to illustrate the operation of some preferred embodiments of the invention and not to limit the scope of the invention. Starting from the above explanation many variations that fall within the scope of the present invention will be evident to a skilled person in the art. The invention is defined by the appended claims.

## Claims

1. A plant support brace (1) for supporting plant stems or branches, whereby the brace comprises:
a central elongate frame (F) comprising at least one segment (2, 4, 6, 8),
whereby the at least one segment forms the base (12) of a channel (20), with a wall (14, 16) extending from either side of the base and at an angle to the base such that the base and side walls together form an open channel suitable for accommodating a part of a branch or stem of a plant, **characterized in that** the at least one segment is provided with a wounding element (30) that is capable of making a wound in the surface of a plant stem or branch.

2. Plant support brace according to claim 1, whereby the brace is deformable.

3. Plant support brace according to any of the preceding claims, whereby the brace comprises two or more segments which are preferably similar segments or repeat segments.

4. Plant support brace according to claim 3, whereby the two or more segments of the brace are each provided with a wounding element.

5. Plant support brace according to any of the preceding claims, whereby the wounding element comprises a sharp point or edge (32), ideally on the inner side of a base or side wall of a segment of the plant support brace.

6. Plant support brace according to any of claims 3-4, or claim 5 when dependent on any of claims 3-4, whereby a wounding element (30) at the trailing edge (44) of a first segment (4) is provided in an at least partly inter-accommodating or inter-engaging arrangement with a corresponding recess (66) provided in the leading edge (42) of the following or second segment (6).

7. Plant support brace according to claim 6, whereby the pair of at least partly inter-accommodating or inter-engaging wounding element and recess are provided on either the base or a side wall of adjacent segments of the backbone of the plant support brace.

8. Plant support brace according to any of the preceding claims, whereby the material of the brace is at least partly and more preferably completely bio-based, bio-degradable or compostable and most preferably comprises at least partly bio-based, bio-degradable or compostable plastic, wood, fibres, metal or alloy.

9. Plant support brace according to claim 8, whereby in an embodiment of the material of the brace comprising a metal or alloy, the metal or alloy is preferably ferromagnetic or paramagnetic.

10. Plant support brace according to any of claims 1-9, whereby the brace is pliable and/or crimpable.

11. Plant support brace according to any of the preceding claims, whereby the brace is substantially open-tubular.

12. Plant support brace according to any of claims 3-11, whereby at least two segments are mutually articulable.

13. Plant support brace according to any of the preceding claims, whereby at least one segment is provided with slits (S) or fault lines (81, 82, 83).

14. Plant support brace according to any of the preceding claims, whereby the side walls on opposite sides of a segment of the base have unequal lengths.

15. Plant support brace according to any of the preceding claims, whereby the segments are provided in the form of a sleeve, rail, clip or rack of segments (70) that can be singulated into a brace with any desired number of segments.

16. Plant support brace according to claim 15, whereby the side walls (14) of a segment are provided with notches or indentations (90) at their top corners lying adjacent to the top corners of neighbouring segments.

17. A system arranged to couple or inter-link a plant support brace according to any of the preceding claims with other parts of one or more plants or with other structures such as plant support sticks or pipes.

## Patentansprüche

1. Pflanzenstütze (1) zum Stützen von Pflanzenstämmen oder -zweigen wobei die Stütze Folgendes umfasst:
einen mittleren langgestreckten Rahmen (F), der mindestens ein Segment (2, 4, 6, 8) umfasst,
wobei das mindestens eine Segment die Basis (12) eines Kanals (20) bildet, mit einer Wand (14, 16), die sich von jeder Seite der Basis und mit einem Winkel zu der Basis derart erstreckt, dass die Basis und die Seitenwände gemeinsam einen offenen Kanal bilden, der zum Unterbringen eines Teils eines Stammes eines Zweiges oder eines Stammes einer Pflanze geeignet ist, **dadurch gekennzeichnet, dass**
das mindestens eine Segment mit einem Verwundungselement (30) versehen ist, das in der Lage ist, eine Wunde in der Oberfläche des Pflanzenstammes oder -zweiges herzustellen.

2. Pflanzenstütze nach Anspruch 1, wobei die Stütze verformbar ist.

3. Pflanzenstütze nach einem der vorstehenden Ansprüche, wobei die Stütze zwei oder mehr Segmente umfasst, die bevorzugt ähnliche Segmente oder Wiederholungssegmente sind.

4. Pflanzenstütze nach Anspruch 3, wobei die zwei oder mehr Segmente der Stütze jeweils mit einem Verwundungselement versehen sind.

5. Pflanzenstütze nach einem der vorstehenden Ansprüche, wobei das Verwundungselement eine scharfe Spitze oder Kante (32) idealerweise an der Innenseite einer Basis oder Seitenwand eines Segments der Pflanzenstütze umfasst.

6. Pflanzenstütze nach einem der Ansprüche 3-4 oder Anspruch 5, falls abhängig von einem der Ansprüche 3-4, wobei ein Verwundungselement (30) an der Hinterkante (44) eines ersten Segments (4) in einer mindestens teilweise einander aufnehmenden oder ineinandergreifenden Anordnung mit einer entsprechenden Vertiefung (66) bereitgestellt ist, die an der Vorderkante (42) des darauffolgenden oder zweiten Segments (6) bereitgestellt ist.

7. Pflanzenstütze nach Anspruch 6, wobei das Paar aus mindestens teilweise einander aufnehmendem oder ineinandergreifendem Verwundungselement und Vertiefung an jeder der Basis oder einer Seitenwand aneinandergrenzender Segmente des Rückgrats der Pflanzenstütze bereitgestellt ist.

8. Pflanzenstütze nach einem der vorstehenden Ansprüche, wobei das Material der Stütze mindestens teilweise und bevorzugter zur Gänze biobasiert, biologisch abbaubar oder kompostierbar ist und am besten mindestens teilweise biobasierten, biologisch abbaubaren oder kompostierbaren Kunststoff, Holz, Fasern, Metall oder Legierung umfasst.

9. Pflanzenstütze nach Anspruch 8, wobei in einer Ausführungsform das Material der Stütze ein Metall oder eine Legierung umfasst, wobei das Metall oder die Legierung bevorzugt ferromagnetisch oder paramagnetisch ist.

10. Pflanzenstütze nach einem der Ansprüche 1-9, wobei die Stütze faltbar und/oder biegbar ist.

11. Pflanzenstütze nach einem der der vorstehenden Ansprüche, wobei die Stütze im Wesentlichen die Form einer offenen Röhre aufweist.

12. Pflanzenstütze nach einem der Ansprüche 3-11, wobei mindestens zwei Segmente aneinander anlenkbar sind.

13. Pflanzenstütze nach einem der vorstehenden Ansprüche, wobei mindestens ein Segment mit Schlitzen (S) oder Bruchlinien (81, 82, 83) versehen ist.

14. Pflanzenstütze nach einem der vorstehenden Ansprüche, wobei die Seitenwände an entgegengesetzten Seiten eines Segments der Basis ungleiche Längen aufweisen.

15. Pflanzenstütze nach einem der vorstehenden Ansprüche, wobei die Segmente in der Form einer Hülse, Schiene, Klammer oder eines Gestells von Segmenten (70) bereitgestellt sind, die in eine Stütze mit jeder gewünschten Anzahl von Segmenten vereinzelt werden können.

16. Pflanzenstütze nach Anspruch 15, wobei die Seitenwände (14) eines Segments mit Kerben oder Eindrückungen (90) an ihren oberen Ecken versehen sind, die an die oberen Ecken benachbarter Segmente angrenzen.

17. System, das eingerichtet ist, um eine Pflanzenstütze nach einem der vorstehenden Ansprüche mit anderen Teilen einer oder mehrerer Pflanzen oder mit anderen Strukturen, wie Pflanzenstützstäben oder -rohren aneinander zu verketten.

## Revendications

1. Dispositif de support de plante (1) destiné à supporter des tiges ou des branches de plantes, dans lequel le dispositif comprend :
un cadre allongé central (F) comprenant au moins un segment (2, 4, 6, 8), dans lequel l'au moins un segment forme la base (12) d'un canal (20), avec une paroi (14, 16) s'étendant de chaque côté de la base et selon un angle par rapport à la base, de sorte que la base et les parois latérales forment conjointement un canal ouvert adapté pour accueillir une partie d'une branche ou d'une tige d'une plante, **caractérisé en ce que**
l'au moins un segment est doté d'un élément blessant (30) capable de faire une blessure dans la surface d'une tige ou d'une branche de plante.

2. Dispositif de support de plante selon la revendication 1, dans lequel le dispositif est déformable.

3. Dispositif de support de plante selon l'une quelconque des revendications précédentes, dans lequel le dispositif comprend deux ou plusieurs segments, lesquels sont de préférence des segments similaires ou des segments répétés.

4. Dispositif de support de plante selon la revendication 3, dans lequel les deux ou plusieurs segments du dispositif sont respectivement dotés d'un élément de blessure.

5. Dispositif de support de plante selon l'une quelconque des revendications précédentes, dans lequel l'élément de blessure comprend une pointe ou un bord acéré (32), idéalement sur le côté intérieur d'une base ou d'une paroi latérale d'un segment du dispositif de support de plante.

6. Dispositif de support de plante selon l'une quelconque des revendications 3-4, ou la revendication 5 dans la mesure où celle-ci dépend de l'une quelconque des revendications 3-4, dans lequel un élément de blessure (30) sur le bord arrière (44) d'un premier segment (4) est disposé selon une configuration d'emboîtement ou d'engagement mutuel au moins partiel avec une cavité (66) correspondante disposée dans le bord avant (42) du segment suivant ou deuxième segment (6).

7. Dispositif de support de plante selon la revendication 6, dans lequel la paire constituée par l'élément de blessure et la cavité au moins partiellement emboîtés ou engagés mutuellement est disposée de part et d'autre de la base ou d'une paroi latérale de segments adjacents de la structure du dispositif de support de plante.

8. Dispositif de support de plante selon l'une quelconque des revendications précédentes, dans lequel le matériau du dispositif est au moins partiellement et de préférence entièrement d'origine biologique, biodégradable ou compostable et comprend de manière encore plus préférentielle un plastique, du bois, des fibres, un métal ou un alliage au moins partiellement d'origine biologique, biodégradable ou compostable.

9. Dispositif de support de plante selon la revendication 8, dans lequel, dans une forme de réalisation du matériau du dispositif comprenant un métal ou un alliage, le métal ou l'alliage est de préférence ferromagnétique ou paramagnétique.

10. Dispositif de support de plante selon l'une quelconque des revendications 1-9, dans lequel le dispositif peut être plié et/ou serti.

11. Dispositif de support de plante selon l'une quelconque des revendications précédentes, dans lequel le dispositif est substantiellement tubulaire ouvert.

12. Dispositif de support de plante selon l'une quelconque des revendications 3-11, dans lequel au moins deux segments peuvent être articulés mutuellement.

13. Dispositif de support de plante selon l'une quelconque des revendications précédentes, dans lequel au moins un segment est doté de fentes (S) ou de lignes de rupture (81, 82, 83).

14. Dispositif de support de plante selon l'une quelconque des revendications précédentes, dans lequel les parois latérales sur des côtés opposés d'un segment de la base présentent des longueurs inégales.

15. Dispositif de support de plante selon l'une quelconque des revendications précédentes, dans lequel les segments sont conçus sous la forme d'un manchon, d'un rail, d'un clip ou d'un support de segments (70) susceptibles d'être individualisés en un dispositif comprenant n'importe quel nombre de segments au choix.

16. Dispositif de support de plante selon la revendication 15, dans lequel les parois latérales (14) d'un segment sont dotées d'encoches ou d'indentations (90) au niveau de leurs coins supérieurs adjacents aux coins supérieurs de segments voisins.

17. Système conçu pour accoupler ou assembler entre eux un dispositif de support de plante selon l'une quelconque des revendications précédentes et d'autres parties d'une ou de plusieurs plantes ou d'autres structures telles que des baguettes ou tubes de support de plantes.
